# FASCICULE DE BREVET EUROPEEN

(11) **EP 3 366 530 B1**
(45) Date de publication et mention de la délivrance du brevet: **17.06.2020**
(21) Numéro de dépôt: 18020081.8
(22) Date de dépôt: 27.02.2018
(51) Int. Cl.: B60S 1/04

(54) **ENSEMBLE POUR ÉQUIPEMENT DE VÉHICULE AUTOMOBILE ET VÉHICULE AUTOMOBILE ASSOCIÉ**
EINHEIT ZUR AUSRÜSTUNG EINES KRAFTFAHRZEUGS, UND ENTSPRECHENDES KRAFTFAHRZEUG
ASSEMBLY FOR MOTOR VEHICLE EQUIPMENT AND ASSOCIATED MOTOR VEHICLE

(30) Priorité: 28.02.2017 FR 1751599
(43) Date de publication de la demande: 29.08.2018
(73) Titulaire: Valeo Systèmes d'Essuyage, 78322 Le Mesnil Saint Denis (FR)
(72) Inventeur: Sanon, Anne, 78322 LE MESNIL SAINT DENIS (FR)
(74) Mandataire: Valeo Systèmes d'Essuyage

(56) Documents cités:
- EP-A1- 0 689 975
- DE-A1-102004 009 279
- DE-A1-102011 090 155
- FR-A1- 2 721 883
- FR-A1- 2 853 606
- US-A1- 2003 001 407

## Description

La présente invention concerne le domaine des équipements de véhicule automobile comprenant un moteur électrique et plus précisément les ensembles destinés à fixer les moteurs électriques de ces équipements via une plaque de fixation.

Les plaques de fixation sont destinées à assurer le maintien des moteurs électriques et leur fixation sur d'autres éléments du véhicule comme par exemple un élément de structure du véhicule ou un autre élément du système d'essuyage. Les moteurs électriques des équipements sont généralement protégés par des carters qui comprennent des plaques qui peuvent servir de plaque de fixation ou alors le carter peut être fixé sur une plaque de fixation intermédiaire. Dans certains cas, le carter peut aussi protéger d'autres éléments de l'équipement. Par exemple dans un équipement d'essuie glace, le moteur électrique peut être couplé à un réducteur et le carter protège à la fois le moteur électrique et le réducteur.

La plaque de fixation, qui fait ou non partie du carter, est réalisée en métal et/ou en plastique et est généralement fixée à un élément de structure du véhicule par le biais de vis de maintien.

Le document DE 10 2004 009 279 A1 montre un ensemble pour équipement de véhicule automobile selon le préambule de la première revendication.

Un problème lié aux équipements de véhicule automobile comprenant un moteur électrique concerne les vibrations qu'ils peuvent produire. En effet, l'acoustique et l'absence de vibrations apparaissent comme des éléments de confort essentiels dans les véhicules automobiles actuels de sorte qu'il apparaît nécessaire d'empêcher ou pour le moins atténuer la transmission des vibrations produites par un moteur électrique aux autres éléments du véhicule et notamment à l'habitacle.

Ainsi, il est connu d'utiliser des plots amortisseurs positionnés à l'interface entre l'équipement comprenant un moteur électrique et la structure du véhicule, c'est-à-dire au niveau de la plaque de fixation, pour obtenir un découplage mécanique et atténuer les vibrations produites par le moteur électrique.

Cependant, il se peut que la réduction des vibrations procurée par les plots amortisseurs soit insuffisante par rapport à la réduction désirée ou que l'on veuille se passer de plots amortisseurs, notamment pour faciliter le montage de l'équipement dans le véhicule.

Afin de surmonter au moins partiellement ces inconvénients, la présente invention concerne un ensemble pour équipement de véhicule automobile comprenant :
- un moteur électrique,
- une plaque de fixation sur laquelle est fixé le moteur électrique au niveau d'au moins un point d'attache et destinée à supporter le moteur électrique, ladite plaque de fixation comprenant :
   - au moins un point de fixation destiné à la fixation de la plaque de fixation sur un élément externe à l'ensemble tel qu'un élément de structure du véhicule,
   - au moins une fente associée au point de fixation et distincte du point de fixation associé, ladite, au moins une, fente s'étendant sur au moins une partie de l'épaisseur de la plaque de fixation, cette plaque de fixation étant réalisée en matériau composite feuilleté comprenant une pluralité de couches dont au moins une des couches est réalisée en matériau viscoélastique.

L'utilisation d'au moins une fente associée à un point de fixation permet d'améliorer le découplage vibratoire entre le moteur électrique et l'élément externe, ce qui peut éventuellement permettre de se passer de plots amortisseurs à l'interface entre la plaque de fixation et l'élément externe. Cela permet ainsi d'améliorer l'atténuation des vibrations produites par le moteur électrique de l'équipement.

Selon un autre aspect de la présente invention, le point de fixation comprend une ouverture ménagée dans la plaque de fixation.

Selon un aspect supplémentaire de la présente invention, au moins une fente est positionnée entre le point de fixation et le point d'attache et s'étend sensiblement perpendiculairement à une direction reliant ledit point de fixation audit point d'attache.

Selon un aspect additionnel de la présente invention, la, au moins une, fente est ménagée à l'intérieur d'un périmètre prédéfini autour du point de fixation.

Selon un autre aspect de la présente invention, le périmètre est compris dans un rayon de 3 cm autour du point de fixation, en particulier entre 1 mm et 3 cm.

Selon un aspect supplémentaire de la présente invention, la, au moins une, fente s'étend autour du point de fixation.

Selon un aspect additionnel de la présente invention, la, au moins une fente décrit un arc de cercle ou un cercle autour du point de fixation.

Selon un autre aspect de la présente invention, l'ensemble comprend au moins une première série de fentes disposées à un premier rayon du point de fixation et une deuxième série de fentes disposées à un deuxième rayon du centre du point de fixation distinct du premier rayon, les fentes de la première série étant au moins partiellement décalées angulairement par rapport aux fentes de la deuxième série.

Selon un aspect supplémentaire de la présente invention, la, au moins une, fente est traversante.

Selon un aspect additionnel de la présente invention, la largeur de la, au moins une, fente est comprise entre 1 et 10 mm.

L'utilisation d'un matériau composite feuilleté avec une couche en matériau viscoélastique permet d'atténuer la transmission des vibrations à travers la plaque. Un tel matériau peut être combiné à l'utilisation de fentes pour atténuer encore plus les vibrations transmises par la plaque de fixation.

Selon un aspect supplémentaire de la présente invention, l'ensemble comprend un moto-réducteur d'un équipement d'essuie-glace.

La présente invention concerne également un véhicule automobile comprenant un ensemble tel que décrit précédemment.

D'autres caractéristiques et avantages de l'invention ressortiront de la description suivante, donnée à titre d'exemple et sans caractère limitatif, en regard des dessins annexés sur lesquels :
- la figure 1 représente une vue éclatée d'un équipement d'essuie-glace de véhicule automobile;
- la figure 2 représente un ensemble pour équipement de véhicule automobile selon la présente invention ;
- les figures 3 à 6 représentent un schéma d'une plaque de fixation d'un ensemble selon la présente invention avec différentes configurations d'ouvertures et de fentes ménagées dans la plaque ;
- les figures 7a et 7b représentent différentes configurations concernant les fentes ménagées dans la plaque ;
- les figures 8 et 9 représentent des vues en coupe VIII-VIII et IX-IX des plaques de fixation des figures 4 et 6.

Sur toutes les figures, les éléments ayant des fonctions identiques portent les mêmes numéros de référence.

Dans la suite de la description, le terme « ouverture », associé notamment à une plaque, désigne une interface mécanique obtenue par une absence de matière comme par exemple un trou ménagé dans la plaque ou une encoche, notamment en forme de demi-lune, ménagée sur un bord de la plaque.

Le terme « plaque de fixation » associé à un ensemble à moteur électrique désigne tout élément ayant une épaisseur inférieure à ses autres dimensions et permettant la fixation d'éléments de l'ensemble comprenant le moteur électrique sur un élément externe à l'ensemble tel qu'un élément de structure du véhicule. Ainsi, la plaque de fixation peut servir uniquement à la fixation ou peut également servir de carter de protection du moteur électrique ou d'autres éléments de l'ensemble. La plaque de fixation n'est pas nécessairement plane.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou inter-changées pour fournir d'autres réalisations.

La présente invention s'applique à tous les équipements de véhicule automobile comprenant un moteur électrique. Dans la suite de la description, un équipement d'essuie-glace va être décrit à titre d'exemple sans que l'invention ne se limite à ce type d'équipement.

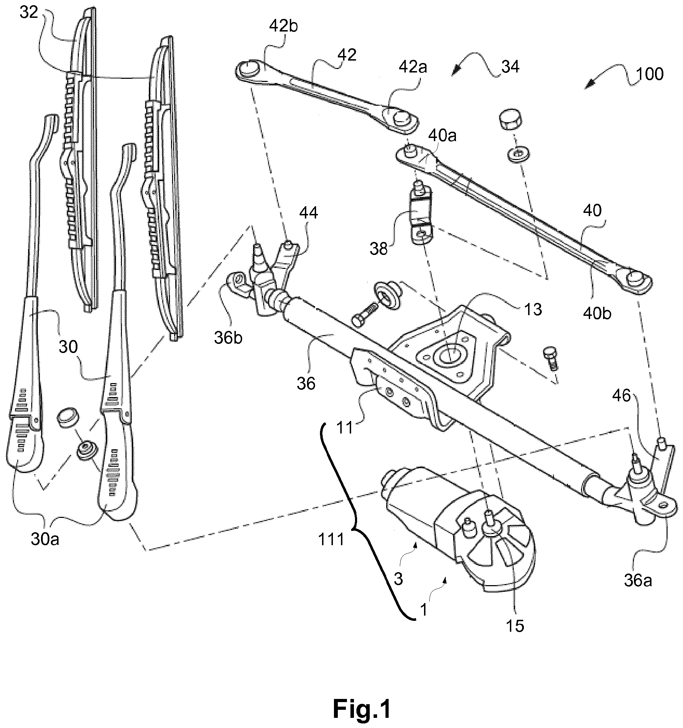

La figure 1 représente une vue éclatée d'un équipement d'essuie-glace 100 comprenant un moteur électrique 3. Dans l'exemple illustré le moteur électrique 3 et un mécanisme réducteur auquel il est relié forment un moto-réducteur 1. L'équipement 100 comporte également des bras d'essuie-glace 30 à l'extrémité desquels sont montés articulés des balais d'essuie-glace 32 et une timonerie 34 permettant de transmettre le mouvement de l'arbre de sortie 15 du moto-réducteur 1 vers les bras d'essuie-glace 30 pour entraîner les bras d'essuie-glace 30 en pivotement. La timonerie 34 relie par exemple les deux bras d'essuie-glace 30 situés sur le pare-brise à l'avant du véhicule, au moto-réducteur 1 pour entraîner le balayage alterné des balais d'essuie-glace 32 conducteur et passager. Pour cela, la timonerie 34 comporte comme éléments : un tube support 36, un levier de sortie moteur 38, également appelé « maneton », deux biellettes 40, 42 dont une biellette « maître » côté conducteur et une biellette « esclave » côté passager, et deux leviers de tête de bras 44, 46 montés rotatifs sur les extrémités du tube support 36.

Une première extrémité du levier de sortie moteur 38 est fixée à l'arbre de sortie 15 du moto-réducteur 1, par exemple par un montage « serré ». Une deuxième extrémité du levier de sortie moteur 38 est articulée avec des premières extrémités 40a, 42a des biellettes 40, 42, par exemple via deux montages «rotule-réceptacle». Des deuxièmes extrémités 40b, 42b des biellettes 40, 42 sont articulées à des premières extrémités d'un levier de tête de bras respectif 44, 46, par exemple par un montage «rotule-réceptacle» respectif. Des deuxièmes extrémités des leviers de tête de bras 44, 46 sont fixées à une tête respective 30a de bras d'essuie-glace 3, par exemple par vissage.

En fonctionnement, la rotation de l'arbre de sortie 15 du moto-réducteur 1 entraîne le pivotement du levier de sortie moteur 38 autour de l'axe de l'arbre de sortie 15. Le levier de sortie moteur 38 entraîne le déplacement des biellettes 40, 42 qui entraîne le pivotement des leviers de tête de bras 44, 46 autour de leurs deuxièmes extrémités respectives, pour entraîner le pivotement des balais d'essuie-glace 32.

L'équipement d'essuie-glace 100 comprend également une plaque de fixation 11 configurée pour maintenir le moto-réducteur 1 et éventuellement le tube support 36. La plaque de fixation 11 est destinée à être fixée, directement ou non, à un élément de structure du véhicule. Le tube support 36 peut également être fixé à un élément de structure au niveau de ses embouts 36a et 36b. Alternativement, la plaque de fixation 11 peut être fixée au tube support 36, le moto-réducteur 1 étant alors fixé à la plaque de fixation 11. Dans ce cas, le tube support 36 est fixé à un élément de structure du véhicule, par exemple via ses embouts 36a et 36b.

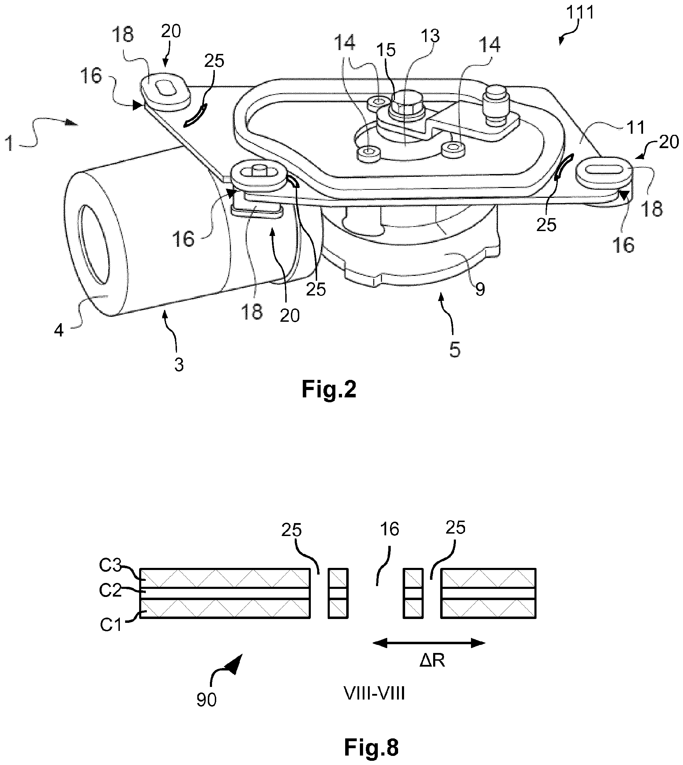

La figure 2 représente un premier mode de réalisation d'un ensemble 111 comprenant un moteur électrique 3 et une plaque de fixation 11 sur laquelle est fixé le moteur électrique au niveau de trois points d'attache 14. Le moteur électrique 3, logé dans une carcasse 4, ici de forme cylindrique, fait par exemple partie d'un moto-réducteur 1 similaire au moto-réducteur 1 présenté sur la figure 1 comprenant en outre un mécanisme réducteur 5 relié au moteur électrique 3. Le moto-réducteur 1 comprend également un socle 9 dans lequel est ménagé un logement destiné à recevoir le mécanisme réducteur 5. Le socle 9 et la carcasse 4 du moteur électrique 3 sont fixés mécaniquement l'un à l'autre, par exemple via des vis ou par soudure ou tout moyen de fixation connu de l'homme du métier. Dans une variante le socle 9 et la carcasse 4 sont monobloc.

Pour certains types de moto-réducteurs 1, par exemple dans le cas de système d'essuie-glace arrière, le socle 9 peut également recevoir un système bielle-manivelle intégré.

La plaque de fixation 11 est dans l'exemple illustré destinée à être fixée d'une part au socle 9 et d'autre part à un élément externe à l'ensemble 111, notamment un élément passif, c'est-à-dire un élément de structure du véhicule ou un élément fixe par rapport à la structure du véhicule, comme par exemple le hayon du véhicule dans le cas d'un essuie-glace arrière ou un élément de la timonerie 34 fixé sur la structure du véhicule.

Dans l'exemple illustré, la plaque de fixation 11 est fixée au socle 9 au niveau d'au moins un point d'attache 14, trois points d'attache 14 réalisés par trois vis 14 dans le cas de la figure 2. D'autres types de point d'attache peuvent également être utilisés pour fixer le moteur électrique 3 à la plaque de fixation 11.

La plaque de fixation 11 peut avoir des formes variées en fonction du modèle du moteur électrique 3, du moto-réducteur 1 et de la forme de l'élément externe sur lequel elle est fixée, notamment une forme plane et rectangulaire dans le cas présent. La plaque de fixation 11 peut également comprendre un orifice 13 , ici un orifice central, à travers lequel s'étend l'arbre de sortie 15 du moto-réducteur 1.

La plaque de fixation 11 comprend également des points de fixation 20, trois dans le cas présent, pour permettre sa fixation sur un élément externe à l'ensemble 111 notamment un élément passif. Dans le cas présent, les points de fixation 20 comprennent des ouvertures 16 destinées à recevoir des vis. Les ouvertures 16 sont par exemple situées sur la périphérie de la plaque de fixation 11 et peuvent être réalisées par des trous ou des encoches de forme diverse, par exemple en forme de demi-lune.

Cependant, l'emplacement et le nombre des points de fixation 20 peut varier en fonction de la forme de la plaque de fixation 11 et de la forme de l'élément externe sur lequel est fixée la plaque de fixation 11.

Les moyens de fixation de la plaque de fixation 11 sur un élément passif peuvent également comprendre des plots amortisseurs 18 positionnés à l'interface entre la plaque de fixation 11 et l'élément externe pour filtrer les vibrations.

La plaque de fixation 11 comprend également au moins une fente 25 associée à un point de fixation 20, ici représenté par une ouverture 16. La fente 25 associée à un point de fixation 20 est disposée de manière à atténuer principalement les vibrations se propageant via le point de fixation 20 associé. De manière préférentielle, au moins une fente 25 sera associée à chaque ouverture 16.

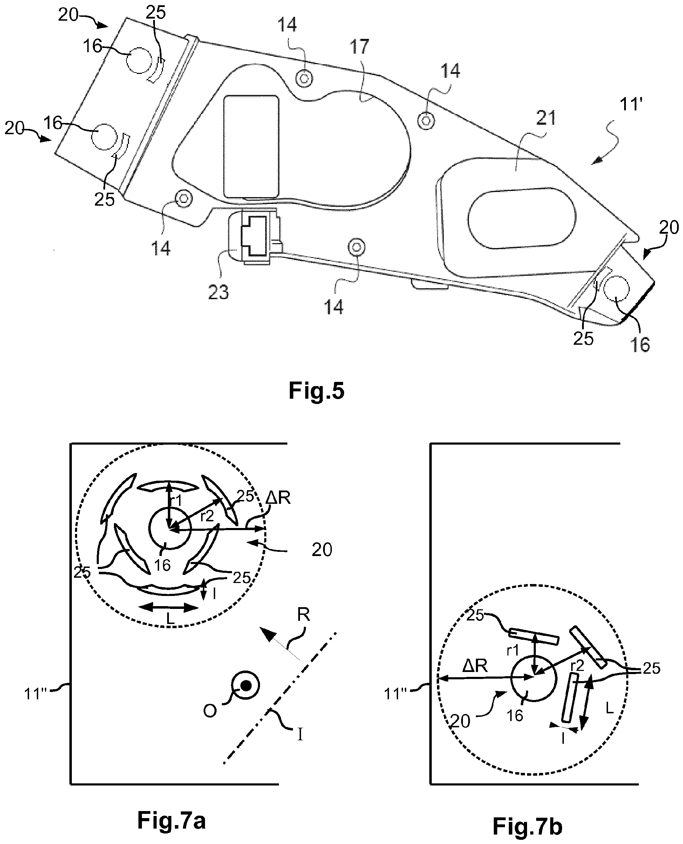

Dans le cas de la figure 2, la plaque de fixation 11 comprend trois fentes 25 associées respectivement aux trois ouvertures 16. Les fentes 25 ont une forme générale allongée. Les fentes 25 sont ménagées à proximité de l'ouverture 16 associée, par exemple dans un périmètre ΔR, dans l'exemple de 3 cm autour du point de fixation 20, c'est-à-dire autour de l'ouverture 16 représenté sur les figures 7a, 7b , 8 et 9. Les fentes 25 sont distinctes de l'ouverture 16. De plus, les fentes 25 s'étendent autour de l'ouverture 16 de manière à atténuer la propagation des vibrations entre le moteur électrique 3 et l'élément externe sur lequel est fixé la plaque de fixation 11.

De manière préférentielle, au moins une fente 25 est positionnée entre le point de fixation 20 et le(s) point(s) d'attache 14 du moteur électrique 3 sur la plaque de fixation 11 qui correspond à l'emplacement des vis 14 dans le cas de la figure 2. De plus, les fentes 25 sont ménagées de façon à former une discontinuité dans la plaque de fixation 11 entre les vis 14 et les points de fixation 20, ici les ouvertures 16 et se propageant dans la plaque de fixation 11 vers les vis de fixation 14. Au moins une des fentes 25 s'étend donc de manière sensiblement perpendiculaire à la direction reliant l'ouverture 16 associée et les vis de fixation 14. Les fentes 25 sont représentés ici avec une forme curviligne mais d'autres formes, notamment rectilignes peuvent également être utilisées. D'autres configurations d'ouvertures 16 et de fentes associées 25 seront décrites dans la suite de la description.

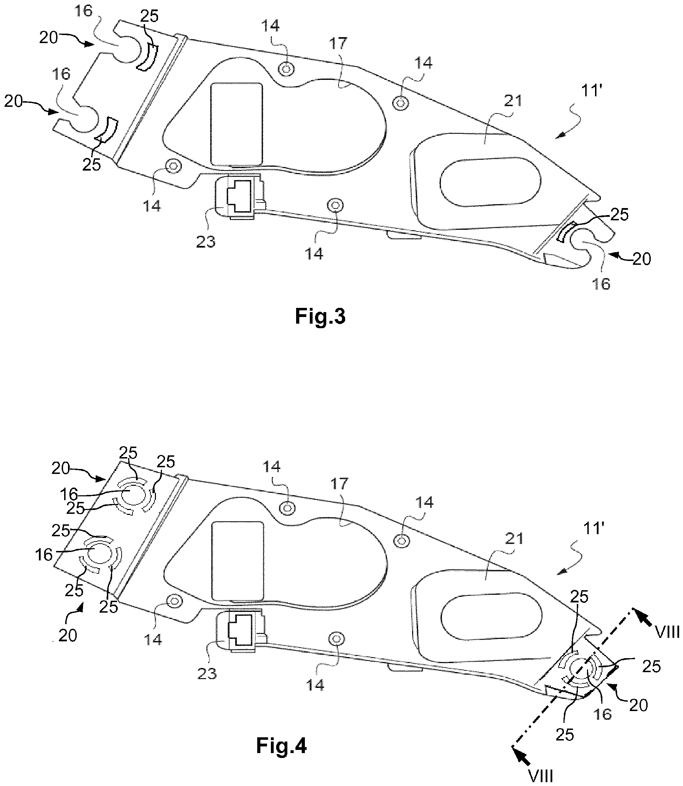

La figure 3 représente une plaque de fixation 11' selon un deuxième mode de réalisation. Dans cet exemple la plaque de fixation 11' vient fermer le logement du socle 9 dans lequel se trouve le mécanisme réducteur 5 et fait donc office de carter du mécanisme réducteur 5. Cette plaque de fixation 11' a une forme allongée et comprend un premier renfoncement 17 correspondant à l'emplacement du mécanisme réducteur 5, un deuxième renfoncement 21 correspondant à l'emplacement du moteur électrique 3 et un connecteur 23 pour assurer la connexion électrique du moto-réducteur 1, par exemple avec un circuit de commande du véhicule. Les vis 14, au nombre de quatre, permettent la fixation du socle 9 sur la plaque de fixation 11', le socle 9 et la carcasse 4 du moteur électrique 3 étant notamment fixés mécaniquement l'un à l'autre.

La plaque de fixation 11' comprend au moins un point de fixation 20, trois dans le cas présent, représentés par les ouvertures 16 permettant la fixation de la plaque de fixation 11' sur un élément de structure du véhicule. Les ouvertures 16 ont ici une forme d'encoche. Deux ouvertures 16 sont placées à une première extrémité de la plaque de fixation 11' et la troisième ouverture est placée à une deuxième extrémité de la plaque de fixation 11'.

Cependant, d'autres formes de plaques de fixation 11' et/ou d'autres emplacements des ouvertures 16 peuvent être envisagés. Les moyens de fixation de la plaque de fixation 11' sont les mêmes que les moyens de fixation de la plaque de fixation 11 décrite précédemment en référence à la figure 2. De plus, la plaque de fixation 11' comprend également trois fentes 25 associées aux trois points de fixation 17, la disposition des fentes 25 étant similaire à la disposition des fentes 25 de la plaque de fixation 11 de la figure 2, c'est-à-dire entre l'ouverture 16 associée et les points d'attache 14 comprenant par exemple les vis de fixation.

Les figures 2 et 3 représentent des ouvertures 16 en forme d'encoche et une fente 25 associée à chaque ouverture 16 pour deux types de plaques de fixation 11, 11' ayant des formes différentes. Cependant, la présente invention ne se limite pas aux deux formes présentées mais s'étend à toute forme de plaque de fixation.

Dans la suite de la description, différentes configurations d'ouvertures 16 et de fentes 25 vont être décrites à partir d'un seul type de plaque de fixation cependant, toutes les configurations qui vont être décrites peuvent s'appliquer aux deux types de plaques de fixation 11 et 11' présentées précédemment ainsi qu'à d'autres types de plaques de fixation qui permettraient la fixation d'un moteur électrique 3 sur un élément externe, en particulier un élément passif tel qu'un élément de structure du véhicule.

Différentes configurations d'ouvertures 16 et de fentes 25 vont maintenant être décrites à partir des figures 4 à 9.

Les figures 4, 5 et 6 représentent une plaque de fixation 11' qui diffère de la plaque de fixation 11' de la figure 3 au niveau des ouvertures 16 et des fentes 25.

La plaque de fixation 11' de la figure 4 a trois ouvertures 16 en forme de trous de pourtour fermé et trois fentes 25 associées à chaque ouverture 16. Les fentes 25 ont une forme en arc de cercle et sont réparties autour de l'ouverture 16 associée de manière à entourer l'ouverture 16 associée sur une grande partie de sa circonférence dans un grand nombre de directions.

La plaque de fixation 11' de la figure 5 a trois ouvertures traversantes 16 de pourtour fermé et une fente associée à chaque ouverture 16. Les fentes 25 sont ménagées entre l'ouverture 16 associée et les vis de fixation 14 correspondant à la fixation du socle supportant le mécanisme réducteur 5 et le moteur électrique 3.

Il est à noter que les fentes 25 ne sont pas nécessairement de forme incurvée, par exemple en arc de cercle, mais peuvent par exemple être rectilignes.

De plus, les fentes 25 associées à une ouverture 16 ne s'étendent pas nécessairement sur tout le pourtour de l'ouverture 16 mais peuvent être limitées à un côté de l'ouverture 16 comme représenté sur les figures 3 et 5.

Les fentes 25 s'étendent préférentiellement dans une direction sensiblement perpendiculaire à la direction reliant l'ouverture associée 16 à la fixation du moteur électrique 3 sur la plaque de fixation 11, 11'.

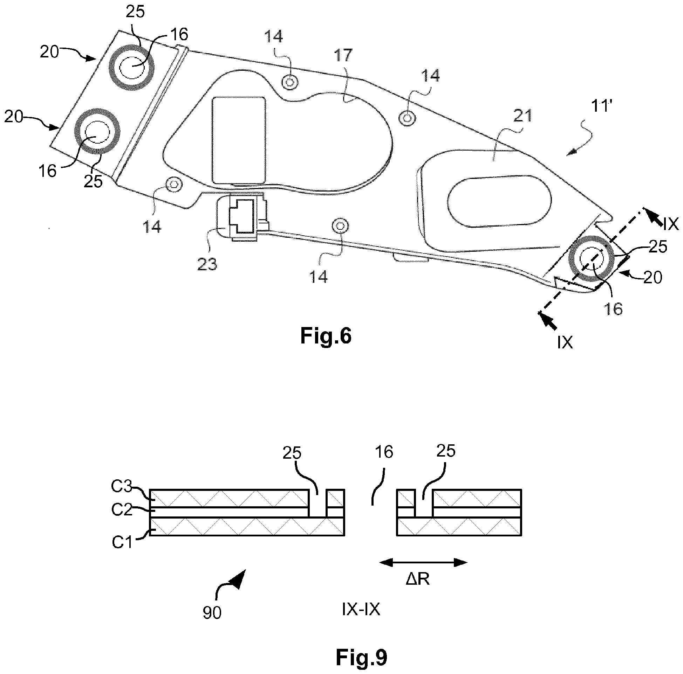

La plaque de fixation 11' de la figure 6 a trois ouvertures 16 en forme de trous de pourtour circulaire fermé et une fente 25 associée à chaque ouverture 16. Les fentes 25 sont ménagées tout autour des ouvertures 16. Dans ce cas, les fentes 25 sont ménagées sur une partie seulement de l'épaisseur de la plaque de fixation 11' comme représenté sur la figure 9 qui représente une vue en coupe selon l'axe de coupe IX-IX de la figure 6.

La figure 9 représente une vue en coupe d'une plaque feuilletée 90 correspondant à la plaque de fixation 11' de la figure 6 mais une telle plaque feuilletée 90 peut aussi être utilisée pour les autres modes de réalisation de la plaque de fixation 11 ou 11'.

La plaque feuilletée 90 illustrée comprend trois couches notées C1, C2 et C3.

Une des couches, notamment la couche C2 peut être réalisée en matériau viscoélastique ce qui permet d'obtenir un découplage vibratoire et d'atténuer le bruit émis par le moto-réducteur 1.

Au moins une des couches, par exemple la couche C1, peut être une couche métallique de manière à former une barrière pour les ondes électromagnétiques et améliorer la compatibilité électro-magnétique entre l'ensemble 111 comprenant le moteur électrique 3 et les autres éléments du véhicule. Les couches C1 et C3 peuvent être formées du même matériau ou d'un matériau différent et les épaisseurs des couches peuvent être identiques ou différentes.

La plaque feuilletée 90 comprend une ouverture 16 en forme de trou traversant et une fente 25 ménagée autour de l'ouverture 16, la fente 25 est ménagée seulement dans les couches C2 et C3 mais pourrait aussi être ménagée seulement dans la couche C3 (alternativement seulement dans les couches C1 et C2 ou seulement dans la couche C1). Le fait que la fente 25 soit ménagée seulement dans certaines couches de la plaque feuilletée 90 permet de réaliser une fente annulaire en forme de cercle tout autour du trou 16 comme représenté sur la figure 6.

Alternativement, lorsque la ou les fentes sont ménagées sur seulement une partie du pourtour de l'ouverture 16 comme représenté par exemple sur la figure 3 ou 4, la fente 25 peut être ménagée sur toute l'épaisseur de la plaque de fixation 11'. La figure 8 correspond à une vue en coupe selon l'axe de coupe VIII-VIII de la figure 4. La figure 8 représente une plaque feuilletée 90 correspondant à la plaque de fixation 11', mais pouvant aussi correspondre à une plaque de fixation 11, comprenant trois couches notées C1, C2 et C3 similaires aux couches de la figure 9 décrites précédemment.

Ainsi, les fentes 25 peuvent être traversantes (sauf dans le cas d'une fente annulaire comme représenté sur la figure 6) ou se limiter à une partie de l'épaisseur de la plaque de fixation 11, 11'. En particulier, si la plaque de fixation 11, 11' est une plaque feuilletée 90 comprenant plusieurs couches, les fentes 25 peuvent être ménagées seulement à travers certaines couches. De plus, comme représenté sur les figures 8 et 9, les fentes sont ménagées dans un périmètre ΔR autour des ouvertures 16.

Des fentes 25 peuvent également être ménagées à différentes distances autour de l'ouverture 16 comme représenté sur les figures 7a et 7b. La plaque de fixation 11" représentée sur la figures 7a et 7b peut correspondre à une plaque de fixation 11 ou 11' telle que décrite dans la présente demande.

La largeur des fentes 25 notée *l* est par exemple comprise entre 1 et 10 mm et la longueur des fentes 25 notée *L* est par exemple comprise entre 1 et 3 cm. La largeur *l* peut être uniforme ou variable le long de la fente 25.

La figure 7a représente une partie d'une plaque de fixation 11" comprenant une ouverture 16 et une première configuration de fentes 25 associées à l'ouverture 16.

Cette première configuration comprend une première série de trois fentes 25 réparties autour de l'ouverture 16 qui est disposée à un premier rayon r1 du centre de l'ouverture 16 et une deuxième série de fentes 25 réparties autour de l'ouverture 16 qui est disposée à un deuxième rayon r2 supérieur au premier rayon r1. Les rayons r1 et r2 sont compris dans le périmètre ΔR autour de l'ouverture 16.

De plus, les fentes 25 de la première série sont décalées angulairement des fentes 25 de la deuxième série de manière à être réparties tout autour de l'ouverture 16. Les fentes ont une forme incurvée en forme d'arcs de cercle mais d'autres formes, notamment rectilignes peuvent également être utilisées.

La figure 7b représente une plaque de fixation 11" comprenant une ouverture 16 et une deuxième configuration de fentes 25 associées à une ouverture 16. Dans cette deuxième configuration, l'ouverture 16 est associée à trois fentes 25 rectilignes, deux fentes 25 situées à un premier rayon r1 et une troisième fente 25 située à un deuxième rayon r2 et les fentes 25 sont situées seulement sur une certaine portion autour de l'ouverture 16. Les fentes 25 sont également décalées angulairement les unes des autres pour couvrir un angle important autour de l'ouverture 16. Les dimensions des fentes 25 sont semblables à celles décrites pour les fentes 25 de la figure 7a et sont également comprises dans le périmètre ΔR autour de l'ouverture 16.

Par ailleurs, dans les différents modes de réalisation présentés précédemment, les caractéristiques (nombre, taille, forme..) des fentes 25 et notamment leur orientation peut être adaptée en fonction de la position de l'axe de rotation du moteur électrique 3.Pour cela, de manière avantageuse, des fentes sont au moins en partie orientées de façon radiale et orthoradiale par rapport à l'axe de rotation du moteur électrique 3. L'axe de rotation I du moteur 3 est représenté de manière schématique par un trait en pointillés sur la figure 7a. Les directions radiale et orthoradiale sont représentées respectivement par les flèches R et O. Ainsi, de manière à limiter la transmission des vibrations produites par le moteur électrique 3, des fentes 25 sont placées dans les directions radiale et/ou orthoradiale de l'axe de rotation I. Dans le cas de la figure 7a, des fentes 25 sont placées dans la direction radiale R entre l'axe de rotation I et l'ouverture 16.

Les différentes caractéristiques des fentes 25 présentées sur les différentes figures peuvent être combinées, par exemple une pluralité de fentes 25 rectilignes peut être associée à une ouverture 16 en forme d'encoche, des fentes rectilignes et curvilignes peuvent être associées à une même ouverture 16. D'autres formes de fentes 25, par exemple en dents de scie ou en vague peuvent également être utilisées ainsi que d'autre formes d'ouvertures 16, par exemple oblongue, de sorte que la présente invention ne se limite pas à la forme des ouvertures 16 et des fentes 25 présentées sur les figures.

De manière générale, la position, le nombre et la taille (largeur *l* et longueur L) des fentes 25 sont déterminés de manière à atténuer des vibrations entre le moteur électrique 3 et l'élément externe comme par exemple l'élément de structure sur lequel est fixé la plaque de fixation 11, 11', 11" tout en limitant au maximum la perte de rigidité de la plaque de fixation 11, 11', 11".

L'utilisation de fentes 25 pour atténuer la transmission des vibrations ne requiert pas nécessairement l'utilisation de plots amortisseurs au niveau des moyens de fixation de la plaque de fixation 11, 11', 11" sur l'élément externe comme par exemple un élément de structure du véhicule de sorte que l'utilisation de plots amortisseurs est facultative.

L'utilisation de fentes 25 autour des points de fixation 20 servant à la fixation de la plaque de fixation 11, 11', 11" assurant la liaison entre un ensemble comprenant un moteur électrique 3 et le reste du véhicule permet donc d'atténuer la transmission des vibrations émises par le moteur électrique 3 vers le reste du véhicule et contribue ainsi à améliorer le confort général pour les utilisateurs du véhicule sans nécessiter d'équipement supplémentaire et donc sans engendrer de coût supplémentaire. L'utilisation de fentes peut être couplée à l'utilisation d'une plaque composite feuilletée et/ou de plots amortisseurs ou seule pour améliorer la filtration des vibrations transmises entre le moteur électrique et le reste du véhicule.

## Revendications

1. Ensemble (111) pour équipement de véhicule automobile comprenant :
- un moteur électrique (3),
- une plaque de fixation (11, 11', 11") sur laquelle est fixé le moteur électrique (3) au niveau d'au moins un point d'attache (14), ladite plaque de fixation (11, 11', 11") comprenant :
- au moins un point de fixation (20) destiné à la fixation de la plaque de fixation (11, 11', 11") sur un élément externe à l'ensemble (111) tel qu'un élément de structure du véhicule, la plaque de fixation (11, 11', 11") présentant au moins une fente (25) associée au point de fixation (20) et distincte du point de fixation (20) associé, ladite, au moins une, fente (25) s'étendant sur au moins une partie de l'épaisseur de la plaque de fixation (11, 11', 11") l'ensemble étant **caractérisé en ce que** la plaque de fixation (11, 11', 11") est réalisée en matériau composite feuilleté comprenant une pluralité de couches (C1, C2, C3) dont au moins une des couches est réalisée en matériau viscoélastique.

2. Ensemble (111) selon la revendication 1 dans lequel le point de fixation (20) comprend une ouverture (16) ménagée dans la plaque de fixation (11, 11', 11").

3. Ensemble (111) selon la revendication 1 ou 2 dans lequel au moins une fente (25) est positionnée entre le point de fixation (20) et le, au moins un, point d'attache (14) et s'étend sensiblement perpendiculairement à une direction reliant ledit point de fixation (20) audit point d'attache (14).

4. Ensemble (111) selon l'une des revendications précédentes dans lequel la, au moins une, fente (25) est ménagée dans un périmètre (ΔR) prédéfini autour du point de fixation (20).

5. Ensemble (111) selon la revendication 4 dans lequel le périmètre (ΔR) est compris dans un rayon de 3 cm autour du point de fixation (20).

6. Ensemble (111) selon la revendication 4 ou 5 dans lequel la, au moins une, fente (25) s'étend autour du point de fixation (20).

7. Ensemble (111) selon la revendication 6 dans lequel la, au moins une fente (25) décrit un arc de cercle ou un cercle autour du point de fixation (20).

8. Ensemble (111) selon la revendication 6 ou 7 comprenant au moins une première série de fentes (25) disposées à un premier rayon (r1) du point de fixation (20) et une deuxième série de fentes (25) disposées à un deuxième rayon (r2) du centre du point de fixation (20) distinct du premier rayon (r1), les fentes (25) de la première série étant au moins partiellement décalées angulairement par rapport aux fentes de la deuxième série.

9. Ensemble (111) selon l'une des revendications précédentes dans lequel la, au moins une, fente (25) est traversante.

10. Ensemble (111) selon l'une des revendications précédentes dans lequel la largeur de la, au moins une, fente (25) est comprise entre 1 et 10 mm.

11. Ensemble (111) selon l'une des revendications précédentes comprenant un moto-réducteur (1) d'un équipement d'essuie-glace.

12. Véhicule automobile comprenant un ensemble (111) selon l'une des revendications précédentes.

## Patentansprüche

1. Anordnung (111) zur Ausrüstung eines Kraftfahrzeugs, welche umfasst:
- einen Elektromotor (3),
- eine Befestigungsplatte (11, 11', 11"), auf welcher der Elektromotor (3) an wenigstens einem Montagepunkt (14) befestigt ist, wobei die Befestigungsplatte (11, 11', 11") umfasst;
- wenigstens einen Befestigungspunkt (20), der zur Befestigung der Befestigungsplatte (11, 11', 11") an einem Element außerhalb der Anordnung (111), wie etwa einem Strukturelement des Fahrzeugs, bestimmt ist,
wobei die Befestigungsplatte (11, 11', 11") wenigstens einen Schlitz (25) aufweist, der dem Befestigungspunkt (20) zugeordnet ist und von dem zugeordneten Befestigungspunkt (20) verschieden ist, wobei der wenigstens eine Schlitz (25) sich auf wenigstens einem Teil der Dicke der Befestigungsplatte (11, 11', 11") erstreckt,
wobei die Anordnung **dadurch gekennzeichnet ist, dass** die Befestigungsplatte (11, 11', 11") aus laminiertem Verbundmaterial hergestellt ist, das mehrere Schichten (C1, C2 C3) umfasst, wobei wenigstens eine der Schichten aus viskoelastischem Material hergestellt ist.

2. Anordnung (111) nach Anspruch 1, wobei der Befestigungspunkt (20) eine in der Befestigungsplatte (11, 11', 11") ausgebildete Öffnung (16) umfasst.

3. Anordnung (111) nach Anspruch 1 oder 2, wobei wenigstens ein Schlitz (25) zwischen dem Befestigungspunkt (20) und dem wenigstens einen Montagepunkt (14) positioniert ist und sich im Wesentlichen senkrecht zu einer Richtung erstreckt, die den Befestigungspunkt (20) mit dem Montagepunkt (14) verbindet.

4. Anordnung (111) nach einem der vorhergehenden Ansprüche, wobei der wenigstens eine Schlitz (25) in einem vordefinierten Umkreis (ΔR) um den Befestigungspunkt (20) ausgebildet ist.

5. Anordnung (111) nach Anspruch 4, wobei der Umkreis (ΔR) in einem Radius von 3 cm um den Befestigungspunkt (20) enthalten ist.

6. Anordnung (111) nach Anspruch 4 oder 5, wobei sich der wenigstens eine Schlitz (25) um den Befestigungspunkt (20) herum erstreckt.

7. Anordnung (111) nach Anspruch 6, wobei der wenigstens eine Schlitz (25) einen Kreisbogen oder einen Kreis um den Befestigungspunkt (20) beschreibt.

8. Anordnung (111) nach Anspruch 6 oder 7, welche wenigstens eine erste Reihe von Schlitzen (25), die auf einem ersten Radius (r1) um den Befestigungspunkt (20) angeordnet sind, und eine zweite Reihe von Schlitzen (25), die auf einem zweiten Radius (r2) mit dem Befestigungspunkt (20) als Mittelpunkt angeordnet sind, der von dem ersten Radius (r1) verschieden ist, umfasst, wobei die Schlitze (25) der ersten Reihe in Bezug auf die Schlitze der zweiten Reihe wenigstens teilweise winkelversetzt sind.

9. Anordnung (111) nach einem der vorhergehenden Ansprüche, wobei der wenigstens eine Schlitz (25) durchgehend ist.

10. Anordnung (111) nach einem der vorhergehenden Ansprüche, wobei die Breite des wenigstens einen Schlitzes (25) zwischen 1 und 10 mm liegt.

11. Anordnung (111) nach einem der vorhergehenden Ansprüche, welche einen Getriebemotor (1) einer Scheibenwischeranlage umfasst.

12. Kraftfahrzeug, welches eine Anordnung (111) nach einem der vorhergehenden Ansprüche umfasst.

## Claims

1. Assembly (111) for motor vehicle equipment comprising:
- an electric motor (3),
- a fixing plate (11, 11', 11") to which the electric motor (3) is fixed at at least one attachment point (14), said fixing plate (11, 11', 11") comprising:
- at least one fixing point (20) intended for the fixing of the fixing plate (11, 11' 11") to an element external to the assembly (111) such as a structural element of the vehicle,
the fixing plate (11, 11' 11") having at least one slit (25) associated with the fixing point (20) and distinct from the associated fixing point (20), said, at least one, slit (25) extending over at least a part of the thickness of the fixing plate (11, 11',11"), the assembly being **characterized in that** the fixing plate (11, 11', 11") is made of a laminated composite material comprising a plurality of layers (C1, C2, C3), of which at least one of the layers is made of viscoelastic material.

2. Assembly (111) according to Claim 1, wherein the fixing point (20) comprises an aperture (16) formed in the fixing plate (11, 11', 11").

3. Assembly (111) according to Claim 1 or 2, wherein at least one slit (25) is positioned between the fixing point (20) and the, at least one, attachment point (14) and extends substantially at right angles to a direction linking said fixing point (20) to said attachment point (14).

4. Assembly (111) according to one of the preceding claims, wherein the, at least one, slit (25) is formed in a predefined perimeter (ΔR) around the fixing point (20).

5. Assembly (111) according to Claim 4, wherein the perimeter (ΔR) lies within a radius of 3 cm around the fixing point (20).

6. Assembly (111) according to Claim 4 or 5, wherein the, at least one, slit (25) extends around the fixing point (20).

7. Assembly (111) according to Claim 6, wherein the, at least one, slit (25) describes a circular arc or a circle around the fixing point (20).

8. Assembly (111) according to Claim 6 or 7, comprising at least one first series of slits (25) disposed at a first radius (r1) from the fixing point (20) and a second series of slits (25) disposed at a second radius (r2) from the centre of the fixing point (20) distinct from the first radius (r1), the slits (25) of the first series being at least partially offset angularly relative to the slits of the second series.

9. Assembly (111) according to one of the preceding claims, wherein the, at least one, slit (25) is a through-slit.

10. Assembly (111) according to one of the preceding claims, wherein the width of the, at least one, slit (25) lies between 1 and 10 mm.

11. Assembly (111) according to one of the preceding claims, comprising a gear motor (1) of windscreen wiper equipment.

12. Motor vehicle comprising an assembly (111) according to one of the preceding claims.
